# EUROPEAN PATENT APPLICATION

(11) **EP 3 404 392 A1**
(43) Date of publication of application: **21.11.2018**
(21) Application number: 18170927.0
(22) Date of filing: 04.05.2018
(51) Int. Cl.: G01L 19/06, G01L 19/14

(54) **PORTED PRESSURE SENSOR WITH NO INTERNALLY TRAPPED FLUID**

(30) Priority: 16.05.2017 US 201715596882
(71) Applicant: Honeywell International Inc., Morris Plains, NJ New Jersey 07950 (US)
(72) Inventor: BENTLEY, Ian, Morris Plains, NJ New Jersey 07950 (US); PATCH, Jason D., Morris Plains, NJ New Jersey 07950 (US); FRIBLEY, Josh M., Morris Plains, NJ New Jersey 07950 (US); ROTH, Kari, Morris Plains, NJ New Jersey 07950 (US)
(74) Representative: Houghton, Mark Phillip

(57) **Abstract**

Embodiments relate generally to methods and systems for filling a pressure sensor with a pressure transfer fluid, such as a gel, and preventing trapped air within the pressures sensor. A pressure sensor may comprise a substrate; a sense die mounted on the substrate; a housing configured to attach to the substrate over the sense die, wherein the housing comprises an opening to a hollow interior of the housing; and a gel material configured to fill the hollow interior of the housing and cover the sense die, wherein the housing comprises a plurality of shaped walls configured to direct the gel material as it fills the hollow interior of the housing.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Sensors are commonly used to sense environmental parameters such as pressure, temperature, humidity, flow, thermal conductivity, gas concentration, light, magnetic fields, electric fields, as well as many other environmental parameters. Such sensors are used in a wide variety of applications including, for example, medical applications, flight control applications, industrial process applications, combustion control applications, weather monitoring applications, water metering applications, as well as many other applications.

### SUMMARY

In an embodiment, a pressure sensor may comprise a substrate; a sense die mounted on the substrate; a housing configured to attach to the substrate over the sense die, wherein the housing comprises an opening to a hollow interior of the housing; and a gel material configured to fill the hollow interior of the housing and cover the sense die, wherein the housing comprises a plurality of shaped walls configured to direct the gel material as it fills the hollow interior of the housing.

In an embodiment, a method for forming a pressure sensor may comprise forming a housing, wherein the housing comprises a hollow interior, an opening to the hollow interior, a base portion, and one or more angled walls between the base portion and the opening; attaching the base portion of the housing to a substrate, wherein the hollow interior of the housing covers a sense die attached to the substrate; filling the hollow interior of the housing with a gel, wherein the gel is filled, via the opening, from the base portion to a brim of the opening; and directing air within the hollow interior toward the opening during the filling of the gel, via the one or more angled walls, wherein the one or more angled walls prevent the trapping of air while the housing is filled.

In an embodiment, a pressure sensor may comprise a substrate; a sense die mounted on the substrate; and a hollow housing configured to cover the sense die, wherein the housing comprises a port portion, a middle portion, and a base portion, wherein the port portion comprises an opening to a hollow interior of the housing, wherein the base portion is secured to the substrate, wherein the middle portion connects the base portion with the port portion, and wherein the middle portion comprises an internal wall whose profile is an upward sloping curve.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 illustrates a perspective view of a pressure sensor according to an embodiment of the disclosure.
FIG. 2 illustrates a cross-sectional view of a pressure sensor according to an embodiment of the disclosure.
FIG. 3 illustrates a perspective view of a housing for use with a pressure sensor according to an embodiment of the disclosure.
FIG. 4 illustrates a top view of a housing for use with a pressure sensor according to an embodiment of the disclosure.
FIGS. 5A-5B illustrate cross-sectional views of a housing for use with a pressure sensor according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The following brief definition of terms shall apply throughout the application:
The term "comprising" means including but not limited to, and should be interpreted in the manner it is typically used in the patent context;
The phrases "in one embodiment," "according to one embodiment," and the like generally mean that the particular feature, structure, or characteristic following the phrase may be included in at least one embodiment of the present invention, and may be included in more than one embodiment of the present invention (importantly, such phrases do not necessarily refer to the same embodiment);
If the specification describes something as "exemplary" or an "example," it should be understood that refers to a non-exclusive example;
The terms "about" or "approximately" or the like, when used with a number, may mean that specific number, or alternatively, a range in proximity to the specific number, as understood by persons of skill in the art field; and
If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

Embodiments of the disclosure include systems and methods for filling a pressure sensor with a fluid, such as a gel pressure transfer material. In many pressure sensor applications, it is necessary to have a sensor that will not trap any fluids inside the sensor. Examples include drinking water, food and medical applications, where fluid trapped inside a sensor may cause contamination, and liquid level sensors where trapped air inside a sensor will cause the sensor to act as a barometer, not a level sensor. Typical pressure sensors may have flat flush diaphragms, either metal or a gel surface, and may require clamping or a flange to connect to the end user's system. Disclosed embodiments allow for the use of a more conventional pressure port, which may create an easier interface for a customer.

Disclosed embodiments may comprise a thin wall metal cover or housing with a large diameter opening relative to the overall size of the sensor. This allows the sensor to be completely filled with gel, but still have a conventional pressure port that is easy to interface with using an O-ring. The housing with a pressure port (or opening) that has a large diameter relative to the overall size of the cover may be mounted to the top of a substrate. Pressure sense elements and compensation electronics may be mounted to the same substrate, where the gel that fills the housing may protect these elements. The housing may be made from a thin wall metal, such as stainless steel, to improve or maximize the inside diameter of the port and make gel filling easier. The lower walls of the housing, below the round port itself, may be angled to avoid the possibility of trapping air as the gel is dispensed into the cover. The large inside diameter of the port allows both easy access to dispense the gel and a path for air to easily escape, avoiding voids and bubbles in the gel.

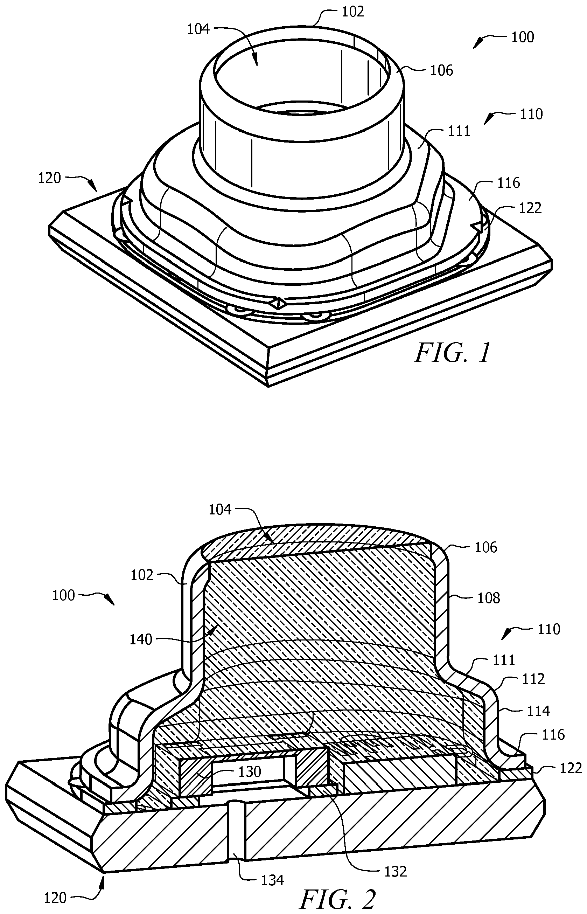

Referring now to FIG. 1, an embodiment of a pressure sensor 100 is shown, where the pressure sensor 100 may comprise a housing 102 installed onto a substrate 120. The housing 102 may comprise a plurality of shaped walls configured to direct a gel as it fills cavity of the hollow interior formed by the housing 102. In some embodiments, the housing 102 may comprise a port portion 102 comprising an opening 104 for accessing the hollow interior of the housing 102. The diameter of the opening 104 may be larger relative to the overall diameter of the pressure sensor 100. As an example, the diameter of the opening 104 may be at least 30% of the overall diameter (or width) of the pressure sensor 100 or substrate. As another example, the diameter of the opening 104 may be at least 50% of the overall diameter (or width) of the pressure sensor 100 or substrate. As an example, the diameter of the opening 104 may be at least 70% of the overall diameter (or width) of the pressure sensor 100 or substrate 120. In some embodiments, the opening 104 may be at least 110%, 120%, 130%, 140%, or 150% of the diameter or length (e.g., the larger dimension) of the sense die 130.

The housing 102 may comprise a base portion 116 configured to attach to the substrate 120 via an adhesive 122. The housing 102 may comprise a middle portion 110 connecting the port portion 106 and the base portion 116, wherein the middle portion 110 may comprise one or more shaped walls. The middle portion 110 may comprise at least one wall 111 that is inclined with respect to the horizontal plane of the housing 102.

In some embodiments, the middle portion 110 may comprise a plurality of curved, vertical, and inclined walls. In the embodiment shown in FIG. 2, the housing 102 may comprise a first curved wall forming the port portion 106, a first vertical wall 108, a first angled wall 111, a second curved wall 112, a second vertical wall 114, and a third curved wall forming the base portion 116. The bottom edge 134 may be secured to the substrate 120 via a layer of adhesive 122.

The housing 102 may cover one or more internal components attached to substrate 120. For example, the hollow interior of the housing may fit over a sense die 130. The sense die 130 may attach to the substrate 120 via a layer of adhesive 132, and may be installed over a port 134 in the substrate 120. The housing 102 may cover any other pressure sense elements and compensation electronics attached to the substrate 120.

The housing 102 may be filled with a gel 140, where the gel 140 may cover the sense die 130 and other components on the substrate 120, and where the gel 140 may fill the entire hollow interior of the housing 102. The gel 140 may be dispensed into the housing 102 via the opening 104. As the gel 140 is dispensed into the housing 102, the gel 140 may fill from the base portion 116 of the housing 102 toward the port portion 106 of the housing 102. As the gel 140 fills the housing 102, the shaped walls of the middle portion 110 may direct any air within the interior and/or gel 140 toward the opening 104, thereby preventing any air from being trapped within the housing 102 by the gel 140. As an example, the slope of the angled wall 111 may be chosen to allow the air to flow out of the housing 102 toward the opening 104. Additionally, the shape and dimensions of the walls 108, 112, and 114 may be chosen to allow the air to flow out of the housing 102 toward the opening 104.

In some embodiments, the shape of the walls within the middle portion 110 may form an upward sloping curve, wherein the walls slope upward and inward from the base portion 116 to the port portion 106. In order to avoid trapping air, the housing may not have any walls at a horizontal or downward sloping angle, which could result in air being trapped by such surfaces. In some embodiments, the shape of the walls within the middle portion 110 may be configured to form a mating surface, such as by holding an O-ring or another adhesive joint. The angled wall 111 may be close to horizontal to create this mating surface.

In some embodiments, the base portion 116 may be relatively square in shape, the port portion 106 may be relatively circular in shape, and the middle portion 110 may comprise angles and curves transitioning from a square shape to a circular shape.

When the pressure sensor 100 is employed to detect pressures, a pressure may be applied to the gel 140 by an external media. This applied pressure may be transferred by the gel 140 to the sense die 130, where the sense die 130 may be configured to detect the pressure. The sense die 130 may be configured to communicate the detected pressure to one or more other elements of the pressure sensor 100. The external media may contact the gel 140 via the opening 104, where in some embodiments, one or more filters or barriers may be located between the gel 140 and the external media. However, in some embodiments, the external media may contact the gel 140 directly without any barriers or filters.

The housing 102 may be configured to prevent trapped air within the hollow interior of the housing 102, as trapped air may affect the sensing function of the pressure sensor 100. For example, trapped air may interfere with the transfer of an applied pressure by the gel 140 to the sense die 130. As another example, the trapped air may damage one or more elements within the pressure sensor 100, thereby diminishing the pressure sensing function of the sensor 100. The housing 102 may comprise a metal material, a plastic material, a soft metal material, and/or any similar material. In some embodiments, the housing 102 may be formed of a consistent material.

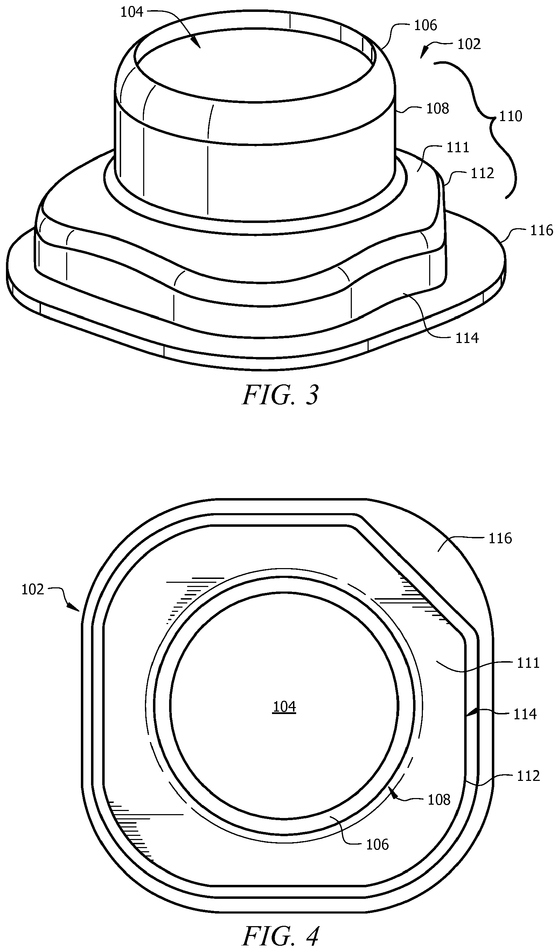

FIG. 3 illustrates a detailed view of the housing 102, showing the opening 104, the port portion 106, middle portion 110, base portion 116, and shaped walls 108, 111, 112, and 114.

FIG. 4 illustrates a top view of the housing 102, showing the opening 104, the port portion 106, base portion 116, and shaped walls 108, 111, 112, and 114.

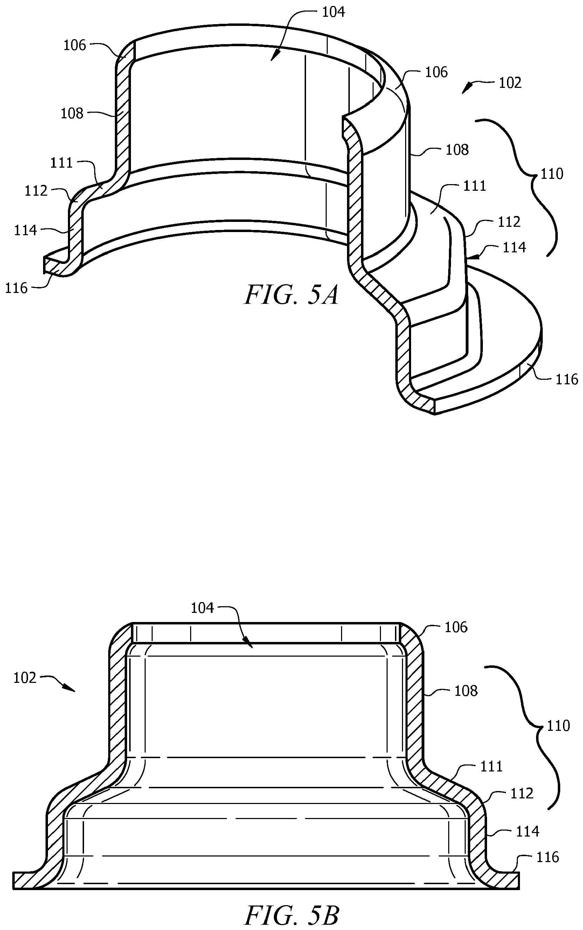

FIGS. 5A-5B illustrate cross-sectional views of the housing 102, showing the opening 104, the port portion 106, middle portion 110, base portion 116, and shaped walls 108, 111, 112, and 114.

Having described various devices and methods herein, exemplary embodiments or aspects can include, but are not limited to:

In a first embodiment, a pressure sensor may comprise a substrate; a sense die mounted on the substrate; a housing configured to attach to the substrate over the sense die, wherein the housing comprises an opening to a hollow interior of the housing; and a gel material configured to fill the hollow interior of the housing and cover the sense die, wherein the housing comprises a plurality of shaped walls configured to direct the gel material as it fills the hollow interior of the housing.

A second embodiment can include the pressure sensor of the first embodiment, wherein the housing comprises a port portion, a middle portion and a base portion, wherein the port portion comprises a brim around the opening to the hollow interior of the housing, wherein the base portion is secured to the substrate, wherein the middle portion connects the base portion with the port portion, and wherein at least one internal wall of the middle portion is inclined with respect to a horizontal plane of the housing.

A third embodiment can include the pressure sensor of the second embodiment, wherein the gel is filled from the base portion to the brim of the port portion via the opening, and wherein the internal wall of the middle portion prevents trapping of air when the gel is dispensed into the housing.

A fourth embodiment can include the pressure sensor of any of the first to third embodiments, wherein the gel is configured to, upon receiving pressure from an external media, transfer the pressure to the sense die, and wherein the sense die is configured to determine the pressure received from the external media.

A fifth embodiment can include the pressure sensor of any of the first to fourth embodiments, wherein the middle portion comprises a plurality of angled internal walls.

A sixth embodiment can include the pressure sensor of the fifth embodiment, wherein the plurality of angled walls forms an upward sloping curve.

A seventh embodiment can include the pressure sensor of any of the first to sixth embodiments, wherein the middle portion comprises an internal wall whose profile is an upward sloping curve.

An eighth embodiment can include the pressure sensor of any of the first to seventh embodiments, wherein the housing is configured to support an O-ring.

A ninth embodiment can include the pressure sensor of any of the first to eighth embodiments, wherein the housing is manufactured by one or more of a stamping process, deep drawing process, a machining process and an injection molding process.

In a tenth embodiment, a method for forming a pressure sensor may comprise forming a housing, wherein the housing comprises a hollow interior, an opening to the hollow interior, a base portion, and one or more angled walls between the base portion and the opening; attaching the base portion of the housing to a substrate, wherein the hollow interior of the housing covers a sense die attached to the substrate; filling the hollow interior of the housing with a gel, wherein the gel is filled, via the opening, from the base portion to a brim of the opening; and directing air within the hollow interior toward the opening during the filling of the gel, via the one or more angled walls, wherein the one or more angled walls prevent the trapping of air while the housing is filled.

An eleventh embodiment can include the method of the tenth embodiment, further comprising applying a pressure to the gel, transferring the applied pressure to the sense die, via the gel, and detecting the transferred applied pressure by the sense die.

A twelfth embodiment can include the method of the tenth or eleventh embodiments, wherein forming the housing comprises forming the base portion, forming a port portion, and forming a middle portion, wherein the middle portion connects the base portion with the port portion, and wherein at least one internal wall of the middle portion is inclined with respect to a horizontal plane of the housing.

A thirteenth embodiment can include the method of the twelfth embodiment, wherein the middle portion comprises an internal wall whose profile is an upward sloping curve.

A fourteenth embodiment can include the sensor of any of the tenth to thirteenth embodiments, wherein forming the housing comprises one or more of a stamping process, a deep drawing process, a machining process, and an injection molding process.

A fifteenth embodiment can include the sensor of the any of the tenth to fourteenth embodiments, further comprising installing an O-ring onto the housing, wherein the one or more angled walls of the housing support the O-ring.

In a sixteenth embodiment, a pressure sensor may comprise a substrate; a sense die mounted on the substrate; and a hollow housing configured to cover the sense die, wherein the housing comprises a port portion, a middle portion, and a base portion, wherein the port portion comprises an opening to a hollow interior of the housing, wherein the base portion is secured to the substrate, wherein the middle portion connects the base portion with the port portion, and wherein the middle portion comprises an internal wall whose profile is an upward sloping curve.

A seventeenth embodiment can include the pressure sensor of the sixteenth embodiment, further comprising gel within the housing to cover the sense die, wherein the gel is filled from the base portion to a brim of the port portion via the opening, and wherein the internal wall of the middle portion directs air from the gel toward the opening when the gel is dispensed into the housing.

An eighteenth embodiment can include the pressure sensor of the seventeenth embodiment, wherein the gel is configured to, upon receiving pressure from an external media, transfer the pressure to the sense die to sense the pressure received from the external media.

A nineteenth embodiment can include the pressure sensor of any of the sixteenth to eighteenth embodiments, wherein the middle portion comprises an external wall whose profile is an upward sloping curve, wherein the external wall of the middle portion is configured to support an O-ring.

A twentieth embodiment can include the pressure sensor of any of the sixteenth to nineteenth embodiments, wherein the middle portion comprises an external wall which is parallel to a horizontal plane of the housing, wherein the external wall of the middle portion is configured to support an O-ring.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present invention(s). Furthermore, any advantages and features described above may relate to specific embodiments, but shall not limit the application of such issued claims to processes and structures accomplishing any or all of the above advantages or having any or all of the above features.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure. Specifically and by way of example, although the headings might refer to a "Field," the claims should not be limited by the language chosen under this heading to describe the so-called field. Further, a description of a technology in the "Background" is not to be construed as an admission that certain technology is prior art to any invention(s) in this disclosure. Neither is the "Summary" to be considered as a limiting characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of the claims shall be considered on their own merits in light of this disclosure, but should not be constrained by the headings set forth herein.

Use of broader terms such as "comprises," "includes," and "having" should be understood to provide support for narrower terms such as "consisting of," "consisting essentially of," and "comprised substantially of." Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

**Preferred Embodiments of the Present Invention are as numbered below:**
1. A pressure sensor comprising:
   a substrate;
   a sense die mounted on the substrate;
   a housing configured to attach to the substrate over the sense die, wherein the housing comprises an opening to a hollow interior of the housing; and
   a gel material configured to fill the hollow interior of the housing and cover the sense die, wherein the housing comprises a plurality of shaped walls configured to direct the gel material as it fills the hollow interior of the housing.
2. The pressure sensor of 1, wherein the housing comprises a port portion, a middle portion and a base portion, wherein the port portion comprises a brim around the opening to the hollow interior of the housing, wherein the base portion is secured to the substrate, wherein the middle portion connects the base portion with the port portion, and wherein at least one internal wall of the middle portion is inclined with respect to a horizontal plane of the housing.
3. The pressure sensor of 2, wherein the gel is filled from the base portion to the brim of the port portion via the opening, and wherein the internal wall of the middle portion prevents trapping of air when the gel is dispensed into the housing.
4. The pressure sensor of 1, wherein the gel is configured to, upon receiving pressure from an external media, transfer the pressure to the sense die, and wherein the sense die is configured to determine the pressure received from the external media.
5. The pressure sensor of 1, wherein the middle portion comprises a plurality of angled internal walls.
6. The pressure sensor of 5, wherein the plurality of angled walls forms an upward sloping curve.
7. The pressure sensor of 1, wherein the middle portion comprises an internal wall whose profile is an upward sloping curve.
8. The pressure sensor of 1, wherein the housing is configured to support an O-ring.
9. The pressure sensor of 1, wherein the housing is manufactured by one or more of a stamping process, deep drawing process, a machining process and an injection molding process.
10. A method for forming a pressure sensor, the method comprising:
   forming a housing, wherein the housing comprises a hollow interior, an opening to the hollow interior, a base portion, and one or more angled walls between the base portion and the opening;
   attaching the base portion of the housing to a substrate, wherein the hollow interior of the housing covers a sense die attached to the substrate;
   filling the hollow interior of the housing with a gel, wherein the gel is filled, via the opening, from the base portion to a brim of the opening; and
   directing air within the hollow interior toward the opening during the filling of the gel, via the one or more angled walls, wherein the one or more angled walls prevent the trapping of air while the housing is filled.
11. The method of 10, further comprising applying a pressure to the gel, transferring the applied pressure to the sense die, via the gel, and detecting the transferred applied pressure by the sense die.
12. The method of 10, wherein forming the housing comprises forming the base portion, forming a port portion, and forming a middle portion, wherein the middle portion connects the base portion with the port portion, and wherein at least one internal wall of the middle portion is inclined with respect to a horizontal plane of the housing.
13. The method of 12, wherein the middle portion comprises an internal wall whose profile is an upward sloping curve.
14. The method of claim 10, wherein forming the housing comprises one or more of a stamping process, a deep drawing process, a machining process, and an injection molding process.
15. The method of claim 10, further comprising installing an O-ring onto the housing, wherein the one or more angled walls of the housing support the O-ring.
16. A pressure sensor comprising:
   a substrate;
   a sense die mounted on the substrate; and
   a hollow housing configured to cover the sense die, wherein the housing comprises a port portion, a middle portion, and a base portion,
   wherein:
   the port portion comprises an opening to a hollow interior of the housing,
   the base portion is secured to the substrate,
   the middle portion connects the base portion with the port portion, and
   the middle portion comprises an internal wall whose profile is an upward sloping curve.
17. The pressure sensor of 16, further comprising gel within the housing to cover the sense die, wherein the gel is filled from the base portion to a brim of the port portion via the opening, and wherein the internal wall of the middle portion directs air from the gel toward the opening when the gel is dispensed into the housing.
18. The pressure sensor of 17, wherein the gel is configured to, upon receiving pressure from an external media, transfer the pressure to the sense die to sense the pressure received from the external media.
19. The pressure sensor of 16, wherein the middle portion comprises an external wall whose profile is an upward sloping curve, wherein the external wall of the middle portion is configured to support an O-ring.
20. The pressure sensor of 16, wherein the middle portion comprises an external wall which is parallel to a horizontal plane of the housing, wherein the external wall of the middle portion is configured to support an O-ring.

## Claims

1. A pressure sensor (100) comprising:
a substrate (120);
a sense die (130) mounted on the substrate (120);
a housing (102) configured to attach to the substrate (120) over the sense die (130), wherein the housing (102) comprises an opening (104) to a hollow interior of the housing (102); and
a gel material (140) configured to fill the hollow interior of the housing (102) and cover the sense die (130), wherein the housing (102) comprises a plurality of shaped walls configured to direct the gel material as it fills the hollow interior of the housing (102).

2. The pressure sensor (100) of claim 1, wherein the housing (102) comprises a port portion (106), a middle portion (110) and a base portion (116), wherein the port portion (106) comprises a brim around the opening (104) to the hollow interior of the housing (102), wherein the base portion (116) is secured to the substrate (120), wherein the middle portion (110) connects the base portion (116) with the port portion (106), and wherein at least one internal wall of the middle portion (110) is inclined with respect to a horizontal plane of the housing (102).

3. The pressure sensor (100) of claim 2, wherein the gel (140) is filled from the base portion (116) to the brim of the port portion (106) via the opening (104), and wherein the internal wall of the middle portion (110) prevents trapping of air when the gel (140) is dispensed into the housing (102).

4. The pressure sensor (100) of claim 1, wherein the gel (140) is configured to, upon receiving pressure from an external media, transfer the pressure to the sense die (130), and wherein the sense die (130) is configured to determine the pressure received from the external media.

5. The pressure sensor (100) of claim 1, wherein the middle portion (110) comprises a plurality of angled internal walls.

6. The pressure sensor (100) of claim 5, wherein the plurality of angled walls forms an upward sloping curve.

7. The pressure sensor (100) of claim 1, wherein the middle portion (110) comprises an internal wall whose profile is an upward sloping curve.

8. The pressure sensor (100) of claim 1, wherein the housing (102) is configured to support an O-ring.

9. The pressure sensor (100) of claim 1, wherein the housing (102) is manufactured by one or more of a stamping process, deep drawing process, a machining process and an injection molding process.

10. A method for forming a pressure sensor, the method comprising:
forming a housing, wherein the housing comprises a hollow interior, an opening to the hollow interior, a base portion, and one or more angled walls between the base portion and the opening;
attaching the base portion of the housing to a substrate, wherein the hollow interior of the housing covers a sense die attached to the substrate;
filling the hollow interior of the housing with a gel, wherein the gel is filled, via the opening, from the base portion to a brim of the opening; and
directing air within the hollow interior toward the opening during the filling of the gel, via the one or more angled walls, wherein the one or more angled walls prevent the trapping of air while the housing is filled.

11. The method of claim 10, further comprising applying a pressure to the gel, transferring the applied pressure to the sense die, via the gel, and detecting the transferred applied pressure by the sense die.

12. The method of claim 10, wherein forming the housing comprises forming the base portion, forming a port portion, and forming a middle portion, wherein the middle portion connects the base portion with the port portion, and wherein at least one internal wall of the middle portion is inclined with respect to a horizontal plane of the housing.

13. The method of claim 12, wherein the middle portion comprises an internal wall whose profile is an upward sloping curve.

14. The method of claim 10, wherein forming the housing comprises one or more of a stamping process, a deep drawing process, a machining process, and an injection molding process.

15. The method of claim 10, further comprising installing an O-ring onto the housing, wherein the one or more angled walls of the housing support the O-ring.
